# EUROPÄISCHE PATENTANMELDUNG

(11) **EP 1 150 457 A2**
(43) Veröffentlichungstag der Anmeldung: **31.10.2001**
(21) Anmeldenummer: 01106981.2
(22) Anmeldetag: 21.03.2001
(51) Int. Cl.: H04L 12/28, H04L 29/06

(54) **Telekommunikationsgerät, Funkstation und Telekommunikationssystem**

(30) Priorität: 28.04.2000 DE 10020966
(71) Anmelder: Tenovis GmbH & Co. KG, 60362 Frankfurt am Main (DE)
(72) Erfinder: Krüger, Matthias, 71126 Gäufelden (DE)
(74) Vertreter: Patentanwaltskanzlei WILHELM & BECK

(57) **Zusammenfassung**

Es wird ein Telekommunikationsgerät (10), eine Funkstation (20) und ein Telekommunikationssystem (1) vorgeschlagen, wobei das Telekommunikationsgerät (10) eine Schnittstelle (11) zu einem Netzwerk (15) aufweist und wobei die Funkstation (20) über das Netzwerk (15) mit dem Telekommunikationsgerät (10) kommuniziert.

## Beschreibung

### Stand der Technik

Es sind Telekommunikationsgeräte, beispielsweise Telefonieplattformen, bekannt, bei denen Teilnehmeranschlüsse für drahtgebundene Endgeräte als Einsteckbaugruppe in den Telefonieserver realisiert sind. Die Anbindung der Hardware an die Telefonieplattform erfolgt über Treiber und eine standardisierte oder firmenspezifische Programmierschnittstelle. Weiterhin ist bekannt, an Nebenstellenanlagen in der gleichen Weise drahtgebundene Endgeräte anzuschließen. Basisstationen zum Anschluß von drahtlosen Endgeräten werden an Nebenstellenanlagen in der Regel wie ein herkömmliches drahtgebundenes Endgerät angeschlossen, wobei ebenfalls eine Einsteckbaugruppe in der Nebenstellenanlage vorhanden ist und die Basisstation über eine Drahtschnittstelle an die entsprechende Einsteckbaugruppe angeschlossen wird.

### Vorteile der Erfindung

Das erfindungsgemäße Telekommunikationsgerät, die erfindungsgemäße Funkstation und das erfindungsgemäße Telekommunikationssystem mit den Merkmalen der nebengeordneten Ansprüche haben demgegenüber den Vorteil, dass Endgeräte über ein Netzwerk anschließbar sind, das bereits vorhanden ist und somit eine Neuinstallation von Drahtschnittstellen entfällt.

Weiterhin ist von Vorteil, dass das Netzwerk ein Datennetzwerk, insbesondere ein Local Area Network (LAN), ist. Dadurch kann ein bereits vorhandenes Datennetzwerk, das insbesondere zur Verbindung von Datenverarbeitungsanlagen vorgesehen ist, auch für die Datenübertragung zwischen dem erfindungsgemäßen Telekommunikationsgerät und der erfindungsgemäßen Funkstation dienen.

Weiterhin ist von Vorteil, dass das Netzwerk einem Standard zur Datenübertragung über Netzwerke, insbesondere TCP/IP, über Ethernet, genügt. Dadurch wird eine weitverbreitete Netzwerkarchitektur bzw. Netzwerkfunktionsweise unterstützt und die Komponenten des Systems können in großem Umfang hergestellt und ausgetausch werden, so dass sich Kosten- und Logistikvorteile ergeben.

Weiterhin ist von Vorteil, dass das Telekommunikationsgerät ein Telefonieapplikationsserver ist. Dadurch sind auch an Telefonieapplikationsserver drahtlose Endgeräte anschließbar.

Weiterhin ist von Vorteil, dass das Telekommunikationsgerät eine Nebenstellenanlage ist. Dadurch sind auch an eine Telekommunikations- oder Nebenstellenanlage drahtlose Endgeräte über das Netzwerk anschließbar.

Es ist weiterhin von Vorteil, dass die signalisierungsspezifischen Hardwarekomponenten in der Funkstation integriert sind. Dadurch ist die Funkstation in der Lage, autonom über das Netzwerk mit dem Telekommunikationsgerät zu kommunizieren, ohne dass im Telekommunikationsgerät Hardwarekomponenten vorhanden sein müssten, die spezifisch für den Betrieb der Funkstation ausgelegt sind.

Weiterhin ist von Vorteil, dass die Funkstation wie ein weiterer Teilnehmer an das Netzwerk anschließbar ist. Dadurch wird der spezifische Kommunikationsbedarf zwischen dem Telekommunikationsgerät und der Funkstation vollständig transparent über das Netzwerk abgewickelt, so dass die Art des Netzwerkes, d.h. welcher Standard verwendet wird, unerheblich ist.

### Zeichnung

Ein Ausführungsbeispiel der Erfindung ist in der Zeichnung dargestellt und in der nachfolgenden Beschreibung näher erläutert. Es zeigen
Figur 1 ein erfindungsgemäßes Telekommunikationssystem mit einem erfindungsgemäßen Telekommunikationsgerät und zwei erfindungsgemäßen Funkstationen,
Figur 2 ein Prinzipdiagramm der Steuerungsschichten eines herkömmlichen Telekommunikationsgerätes gemäß dem Stand der Technik und
Figur 3 ein Prinzipdiagramm der Steuerungsschichten des erfindungsgemäßen Telekommunikationsgerätes und der erfindungsgemäßen Funkstation.

### Beschreibung des Ausführungsbeispiels

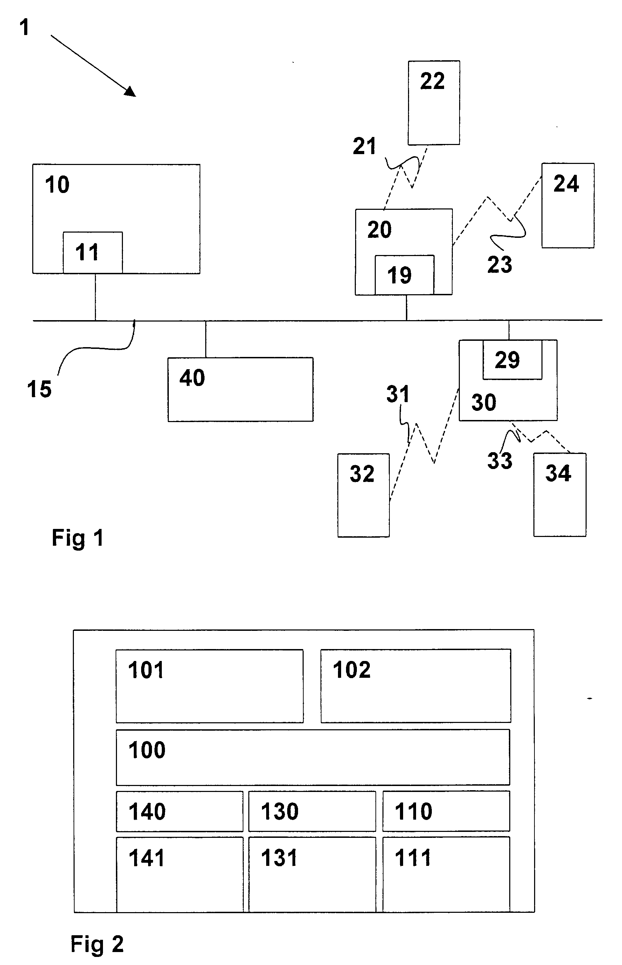

In Figur 1 ist ein erfindungsgemäßes Telekommunikationssystem 1 dargestellt. Das erfindungsgemäße Telekommunikationssystem 1 umfasst wenigstens ein Telekommunikationsgerät 10, eine Funkstation 20 und ein Netzwerk 15. Das Telekommunikationsgerät 10 ist über das Netzwerk 15 mit der Funkstation 20 verbunden. Hierbei ist zum Anschluß des Telekommunikationsgerätes 10 an das Netzwerk 15 eine Schnittstelle 11 vorgesehen und zum Anschluß der Funkstation 20 an das Netzwerk 15 ist eine weitere Schnittstelle 19 vorgesehen. An die Funkstation 20 ist mittels einer ersten Funkschnittstelle 21 ein erstes Telekommunikationsgerät 22 und mittels einer zweiten Funkschnittstelle 23 ein zweites Telekommunikationsendgerät 24 angeschlossen. Hierzu umfasst die Funkstation 20 genauso wie die Telekommunikationsendgeräte 22, 24 eine Antenne und Sende- und/oder Empfangskomponenten zum Betrieb gemäß den Funkschnittstellen 21, 23. An das Netzwerk 15 ist darüber hinaus eine weitere Funkstation 30 angeschlossen, wobei die weitere Funkstation 30 ihrerseits eine weitere Schnittstelle 29 zum Anschluß an das Netzwerk 15 umfasst, wobei die weiteren Schnittstellen 19, 29 der Funkstationen 20, 30 im wesentlichen identisch sind. An die weitere Funkstation 30 sind in zur Funkstation 20 analogen Weise ein drittes Telekommunikationsendgerät 32 und ein viertes Telekommunikationsendgerät 34 über eine dritte Funkschnittstelle 31 bzw. über eine vierte Funkschnittstelle 33 angeschlossen. In Figur 1 ist darüber hinaus an das Netzwerk 15 noch eine weitere Netzwerkkomponente 40 angeschlossen.

Das Telekommunikationsgerät 10 ist erfindungsgemäß insbesondere als Telefonieapplikationsserver oder auch als Telefonieserver vorgesehen. Ein solcher Telefonieserver besteht im wesentlichen aus einer Datenverarbeitungsanlage, beispielsweise ein Personal Computer, die durch ihre Hardware- und Softwareausstattung zur Ausführung von telefoniespezifischen Aufgaben geeignet ist. Das Netzwerk 15 ist erfindungsgemäß insbesondere ein Datennetzwerk, das als Local Area Netzwerk (LAN) ausgelegt ist. Ein solches Netzwerk dient häufig zur Verbindung verschiedener Datenverarbeitungsanlage und von Komponenten, die an solche Datenverarbeitungsanlagen angeschlossen werden sollen. Hierbei gibt es verschiedene Standards für solche Datennetzwerke, wobei beispielhaft der Ethernet-Standard für die physikalische Schicht des OSI-Referenzmodels (OSI = Open System Interconnection) und der TCP/IP-Standard für die Transportschicht des OSI-Modells genannt sei. An ein solches Netzwerk 15 sind in der Regel mehrere Netzwerkkomponenten anschließbar, wobei eine Netzwerkkomponente eine Datenverarbeitungsanlage, wie z.B. ein Personalcomputer, ein Drucker oder auch die erfindungsgemäße Funkstation 20 sein kann. In Figur 1 ist daher lediglich eine beispielhafte Konfiguration des erfindungsgemäßen Kommunikationssystems 1 mit einer relativ bescheidenen Anzahl von Netzwerkkomponenten dargestellt. Insbesondere ist die Anzahl der Funkstationen 20, 30 nicht auf die Zahl zwei begrenzt, sondern es kann eine oder es können mehrere Funkstationen 20, 30 an das mit einem erfindungsgemäßen Telekommunikationsgerät 10 ausgestattete Netzwerk 15 angeschlossen werden.

In einer weiteren Ausführungsform des erfindungsgemäßen Telekommunikationssystems 1 ist das Telekommunikationsgerät 10 als TK-Anlage, Nebenstellenanlage oder PABX vorgesehen.

In Figur 2 ist ein Prinzipdiagramm der Steuerungsschichten eines herkömmlichen Kommunikationsgerätes dargestellt. Das herkömmliche Kommunikationsgerät ist beispielsweise ein herkömmlicher Telefonieapplikationsserver, der auf einer Softwareebene eine Standardtelefonieplattform 100 zur Verfügung stellt, so dass eine erste Applikation 101 und eine zweite Applikation 102 ausführbar sind. Als Beispiel solcher Applikationen 101, 102 seien hier genannt:
Callhandling in einem Callcenter, insbesondere Call-Management bei Eingang eines Anrufs in einem Callcenter:
1) Für den Fall, daß sämtliche Callcenter-Agenten beschäftigt sind und es notwendig ist, den zusätzlich eingegangenen Anruf insbesondere mit einer Wartedurchsage in eine Warteschleife zu stellen, wählt die auf der Telefonieplattform 100 ablaufende Applikation 101, 102 eine passende Durchsage aus, übermittelt sie dem Anrufer und schaltet den Anrufer bei Freiwerden eines passenden Callcenter-Agenten an diesen durch;
2) Für die Auswahl eines besonders qualifizierten Agenten in einem Callcenter, wobei die Wünsche des Anrufers interaktiv über Benutzereingaben an dessen Endgerät der Applikation 101, 102 zugänglich gemacht werden, führt die Applikation einen besonderen Suchalgorithmus aus.

Falls an ein solches herkömmliches Kommunikationsgerät drahtgebundene Endgeräte angeschlossen werden sollen, geschieht dies in aller Regel über verschiedene Treiber 110, 130, 140. Diese Treiber dienen als Softwareschnittstellen zwischen sogenannten Interfacekarten 111, 131, 141 und der Standardtelefonieplattform 100 und wandeln einerseits den von den Interfacekarten 111, 131, 141 kommenden Datenstrom in ein für die Standardtelefonieplattform 100 verstehbares Format und andererseits den von der Standardtelefonieplattform 100 kommenden Datenstrom in ein für die Interfacekarten 111, 131, 141 verstehbares Format um. Die nichtdargestellten drahtgebundenen Endgeräte sind hierbei an die Interfacekarten 111, 131, 141 mittels einer nichtdargestellten Drahtschnittstelle angebunden.

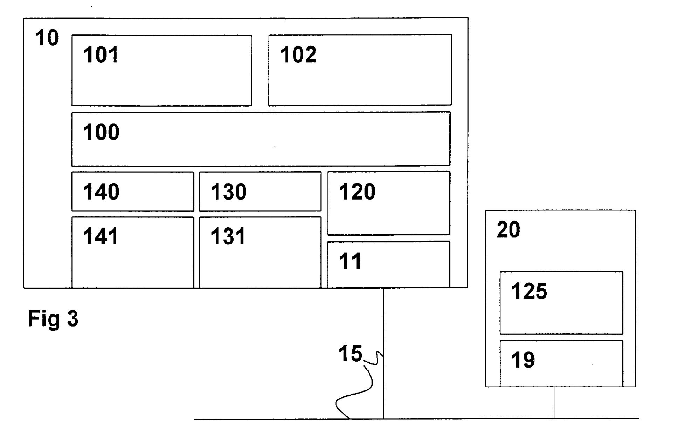

Demgegenüber ist in Figur 3 ein Prinzipdiagramm der Steuerungsschichten des erfindungsgemäßen Telekommunikationsgerätes 10-dargestellt. Das erfindungsgemäße Telekommunikationsgerät 10 stellt ebenfalls eine Standardtelefonieplattform 100 für verschiedene Applikationen 101, 102 zur Verfügung. Weiterhin umfasst das erfindungsgemäße Telekommunikationsgerät 10 beispielhaft ebenfalls Treiber 130, 140 und Interfacekarten 131, 141 zum Anschluß von nichtdargestellten drahtgebundenen Endgeräten. Die drahtgebundenen Endgeräte sind über nichtdargestellte Drahtschnittstellen an die Interfacekarten 131, 141 angebunden.

Für den Anschluß der erfindungsgemäßen Funkstation 20 dient beim erfindungsgemäßen Telekommunikationsgerät 10 das Netzwerk 15, an das sowohl das Telekommunikationsgerät 10 als auch die Funkstation 20 angeschlossen ist. Hierbei ist das erfindungsgemäße Telekommunikationsgerät 10 über die Schnittstelle 11 an das Netzwerk 15 angeschlossen. Die Steuerungshierarchie, d.h. zumindest ein Teil der Ebenen des OSI-Referenzmodels ist auf Seiten des Telekommunikationsgerätes 10 (in absteigender Reihenfolge der Schichten) gegeben durch :
die Applikationen 101, 102,
die Standardtelefonieplattform 100,
ein Programm 120, wobei das Programm 120 als spezieller Treiber 120 zum Betrieb drahtloser Endgeräte 22, 24 bezeichnet wrid,
die Schnittstelle 11 und
das Netzwerk 15, wobei das Netzwerk 15 als Zusammenfassung wenigstens der physikalischen Schicht und der Transportschicht aufzufassen ist.

Die an das Netzwerk 15 angeschlossene Funkstation 20 umfasst die weitere Schnittstelle 19 und die Interfacehardware 125 für drahtlose Endgeräte. Diese Interfacehardware 125, die im folgenden auch als signalisierungsspezifische Hardware 125 für die Bereitstellung der drahtlosen Luftschnittstelle zwischen der Funkstation 20 und den drahlosen Endgeräten 22, 24 bezeichnet wird, ist in Figur 3 nicht näher differenziert, weil sie der Fachmann bereits aus herkömmlichen Systemen zur Kommunikation mit drahtlosen Endgeräten kennt. Hier seien lediglich schlagwortartig die unterschiedlichen Komponenten angeführt. Zur Abstrahlung und zum Empfang der an das drahtlose Endgerät gesendeten bzw. vom drahtlosen Endgerät empfangenen Signale dient eine Antenne, an die ein Sendeempfänger bzw. ein Sender und/oder ein Empfänger angeschlossen ist, wobei der Sender die Antenne mit den abzustrahlenden Signalen versorgt und der Empfänger die von der Antenne empfangenen Signale empfängt. Weiterhin umfasst die Interfacehardware 125 in der Regel wenigstens einen Kanalcodierer und einen Protokollcontroller zur Bedienung des Luftschnittstellenprotokolls. Mit diesen Komponenten interagiert netzwerkseitig die weitere Schnittstelle 19, wobei sie einerseits die von der Interfacehardware 125 empfangenen Signale bzw. Daten derart in ein Format umwandelt, dass die Daten auf dem Netzwerk 15 übertragen werden, und wobei sie andererseits die vom Netzwerk 15 empfangenen Daten derart umwandelt, dass die Interfacehardware 125 die Daten verstehen und'an drahtlose Endgeräte weiterleiten kann. Es ist jedoch zu betonen, dass es erfindungsgemäß insbesondere vorgesehen ist, die Interfacehardware 125 vollständig in die Funkstation 20 zu integrieren. Dies hat den Vorteil, daß die signalisierungsspezifische Hardware 125 nicht teilweise im Telekommunikationsgerät 10 und teilweise in der Funkstation 20 lokalisiert ist - was zwangsläufig eine proprietäre Verbindungsleitung zwischen diesen beiden Teilkomponenten der signalisierungsspezifischen Hardware 125 erfordert - sondern daß die Interfacehardware 125 vollständig in der Funkstation 20 integriert ist und somit eine transparente - und mithin standardisierbare, bzw. einer Standardisierung leichter zugängliche - Datenübertragung über das Netzwerk 15 ermöglicht wird.

Für den Fall, dass das Telekommunikationsgerät 10 eine Nebenstellenanlage ist, kann auch die Standardtelefonieplattform 100 zusammen mit den Applikationen 101, 102 als eine Einheit aufgefasst werden, nämlich als die Vermittlungsplattform der Nebenstellenanlage.

Die Schnittstelle 11 zwischen dem Telekommunikationsgerät 10 und dem Netzwerk 15 ist insbesondere als eine Standardnetzwerkkarte vorgesehen. Eine solche Standardnetzwerkkarte dient der Anbindung, beispielsweise von Datenverarbeitungsanlagen, an Netzwerke. Besonders vorteilhaft ist, dass die Schnittstelle 11 die Kommunikation über das Netzwerk 15 mit einer Mehrzahl von Funkstationen abwickeln kann. D.h. bei einer Vielzahl von über das Netzwerk 15 an das Telekommunikationsgerät 10 angeschlossenen Funkstationen 20, 30 oder auch beliebigen weiteren Netzwerkkomponenten 40 wird insbesondere eine einzige Schnittstelle 11 als Netzwerkkarte verwendet werden. Dies hat den Vorteil, dass weniger Steckplätze durch einen Anschluß einer Vielzahl von Funkstationen 20, 30 an das Telekommunikationsgerät 10 verwendet werden.

## Patentansprüche

1. Telekommunikationsgerät (10) zum Anschluß wenigstens einer Funkstation (20), wobei das Telekommunikationsgerät (10) eine Schnittstelle zu einem Netzwerk (15) aufweist, **dadurch gekennzeichnet, dass** die wenigstens eine Funkstation (20) über das Netzwerk (15) an das Telekommunikationsgerät (10) anschließbar ist, wobei die Schnittstelle (11) zwischen dem Telekommunikationsgerät (10) und dem Netzwerk (15) wenigstens der Kommunikation zwischen dem Telekommunikationsgerät (10) und der wenigstens einen Funkstation (20) dient und wobei die Steuerung der Kommunikation zwischen dem Telekommunikationsgerät (10) und der wenigstens einen Funkstation (20) über wenigstens ein Programm (120) vorgesehen ist.

2. Telekommunikationsgerät (10) nach Anspruch 1, **dadurch gekennzeichnet, dass** das Netzwerk (15) ein Datennetzwerk, insbesondere ein Local Area Netzwerk (LAN), ist.

3. Telekommunikationsgerät (10) nach Anspruch 1 oder 2, **dadurch gekennzeichnet, dass** das Netzwerk (15) einem Standard zur Datenübertragung über Netzwerke, insbesondere TCP/IP über Ethernet, genügt.

4. Telekommunikationsgerät (10) nach einem der vorhergehenden Ansprüche, **dadurch gekennzeichnet, dass** das Telekommunikationsgerät (10) ein Telefonieapplikationsserver ist.

5. Telekommunikationsgerät (10) nach einem der Ansprüche 1-3, **dadurch gekennzeichnet, dass** das Telekommunikationsgerät (10) eine Nebenstellenanlage ist.

6. Funkstation (20) zum Anschluß an ein Telekommunikationsgerät (10) nach einem der vorhergehenden Ansprüche, **dadurch gekennzeichnet, dass** die Funkstation (20) eine weitere Schnittstelle (19) zu dem Netzwerk (15) aufweist und dass die Funkstation (20) über die weitere Schnittstelle (19) und das Netzwerk (15) an das Telekommunikationsgerät (10) anschließbar ist.

7. Funkstation (20) nach Anspruch 6, **dadurch gekennzeichnet, dass** die signalisierungsspezifischen Hardwarekomponenten (125) in der Funkstation (20) integriert sind.

8. Funkstation (20) nach Anspruch 7, **dadurch gekennzeichnet, dass** die Funkstation (20) wie eine weitere Netzwerkkomponente (40) an das Netzwerk (15) anschließbar ist.

9. Funkstation (20) nach einem der Ansprüche 6-8, **dadurch gekennzeichnet, dass** die Funkstation (20) eine Basisstation zur Anbindung wenigstens eines Telekommunikationsendgerätes (22, 24) zur drahtlosen Telekommunikation ist.

10. Telekommunikationssystem (1) mit einem Telekommunikationsgerät (10) nach einem der Ansprüche 1-5 und mit wenigstens einer Funkstation (20) nach einem der Ansprüche 6-9, **dadurch gekennzeichnet, daß** die Kommunikation zwischen dem Telekommunikationsgerät (10) und der Funkstation (20) über das Netzwerk (15) vorgesehen ist.
